# EUROPÄISCHE PATENTSCHRIFT

(11) **EP 0 482 044 B1**
(45) Veröffentlichungstag und Bekanntmachung des Hinweises auf die Patenterteilung: **22.02.1995**
(21) Anmeldenummer: 90910684.1
(22) Anmeldetag: 05.07.1990
(51) Int. Cl.: G06F 12/02, G06F 12/10

(54) **VIRTUELLER SPEICHER FÜR EIN PARALLELRECHNERSYSTEM**
VIRTUAL MEMORY FOR A PARALLEL-COMPUTER SYSTEM
MEMOIRE VITUELLE POUR SYSTEME A CALCULATEURS PARALLELES

(30) Priorität: 07.07.1989 DE 3922432
(43) Veröffentlichungstag der Anmeldung: 29.04.1992
(73) Patentinhaber: SIEMENS AKTIENGESELLSCHAFT, 80333 München (DE); INTERNATIONAL COMPUTERS LTD., London SW6 3JX (GB)
(72) Erfinder: Holt, Nicholas Peter, Hadfield, Via Hyde Cheshire SK14 7ET (GB); Borrmann, Lothar, W-8014 Neubiberg (DE); Henning, Gerhard, W-8028 Taufkirchen (DE); Herdieckerhoff, Martin, W-8000 München 83 (DE); Holzner, Rudolf, W-8300 Landshut (DE); Hutner, Franz, W-8061 Einsbach (DE); Istavrinos, Petro, W-8012 Ottobrunn (DE); Kolb, Dieter, W-8034 Germering (DE); Seidel, Winfried, W-8000 München 70 (DE)
(74) Vertreter: Fuchs, Franz-Josef, Dr.-Ing.
(86) Internationale Anmeldenummer: EP9001086
(87) Internationale Veröffentlichungsnummer: WO9101025

(56) Entgegenhaltungen:
- EP-A- 0 319 148
- THE 8TH INTERNATIONAL CONFERENCE ON DISTRIBUTED COMPUTING SYSTEMS, SAN JOSE, CALIFORNIA, 13.-17. JUNE 1988, IEEE, (NEW YORK, US), C. SCHEURICH ET AL.: "DYNAMIC PAGE MIGRATION IN MULTIPROCESSORS WITH DISTRIBUTED GLOBAL MEMORY", PAGES 162-169
- MINI-MICRO SYSTEM, VOL. 16, NO. 11, OCTOBER 1983, (DENVER, COLORADO, US), N.R. CRANDALL: "SHARED-MEMORY COMPUTER HANDLES HEAVY WORK LOADS", PAGES 245-54
- THE 5TH ANNUAL ACM SYMPOSIUM ON PRINCIPLES OF DISTRIBUTED COMPUTING,1986, ACM, K. LI ET AL.: "MEMORY OCHERENCE IN SHARED VIRTUAL MEMORY SYSTEMS", PAGES 229-239

## Beschreibung

Die Erfindung bezieht sich auf einen virtuellen Speicher für Gruppen von parallel arbeitenden Rechnern, bei dem die Rechner über ein Kommunikationsnetz miteinander verbunden sind und jede Gruppe von Rechnern jeweils einen Prozeß bearbeitet.

Parallelrechnersysteme sind bekannt. Bei solchen Parallelrechnersystemen ist der Zugriff auf gemeinsame Daten bei der Programmierung eines der zentralen Probleme bei der Entwicklung und Anwendung. In einem Parallelrechnersystem arbeiten zur selben Zeit mehrere Rechner an Teilaufgaben eines größeren Problems, die im allgemeinen nicht unabhangig voneinander sind. Problembedingt muß auf gemeinsame Eingangsdaten zugegriffen werden oder es müssen Zwischenergebnisse ausgetauscht werden. Im folgenden soll das Problem als Prozeß bezeichnet werden, dessen Teilprozesse oder Teilaufgaben von verschiedenen Rechnern des Parallelrechnersystems bearbeitet werden. Die Rechner, die einen Prozeß parallel bearbeiten, sollen im folgenden Gruppe von Rechnern benannt werden.

Zur Lösung des eingangs geschilderten Problems kann z.B. ein physikalisch gemeinsamer Speicher für die gemeinsamen Daten zur Verfügung gestellt werden oder es ist auch möglich, daß sie über ein die Rechner verbindendes Kommunikationsnetz ausgetauscht werden. Wenn ein gemeinsamer Speicher für die gemeinsamen Daten vorgesehen wird, dann ist die Anzahl der Rechner des Parallelrechnersystems wegen der begrenzten Speicherbandbreite gering. Wenn die Daten, auf die zugegriffen werden muß, über das Kommunikationsnetzwerk ausgetauscht werden, dann führt dies bei zunehmender Rechneranzahl zu Schwierigkeiten bei der Erstellung durch Programme durch den Anwender.

Aus Memory Coherence in shared virtual Memory Systems", Seiten 229 bis 239, in the 5th Annual ACM Symposium on Principles of Distributed Computing, 1986, ACM ist bekannt, bei einem Parallelrechnersystem, bei dem die einzelnen Rechner über ein Kommunikationsnetzwerk miteinander verbunden sind, die Speicher zu einem virtuellen Speicher zusammenzufassen, mit dem jeder Rechner arbeiten kann. Die virtuellen Adressen werden in physikalische Adressen über Seitentabellen umgewandelt. Wenn mehrere Rechner parallel einen Prozeß bearbeiten, hat jeder der an der Bearbeitung des Prozesses beteiligten Rechner in seiner Übersetzungstabelle eine Information gespeichert, welche Seiten er verwaltet und welche Seiten die anderen Rechner verwalten. Es sind weiterhin Verfahren erläutert, mit denen erreicht werden kann, daß der virtuelle Speicher kohärent ist, also daß kein Prozessor eine Speicherseite ändern kann, wenn ein anderer Prozessor auf diese Speicherzelle zugreift oder diese gerade liest.

Die der Erfindung zugrundeliegende Aufgabe besteht darin, einen virtuellen Speicher für Gruppen von parallelarbeitenden Rechnern anzugeben, bei dem die Rechner über ein Kommunikationsnetz miteinander verbunden sind und jede Gruppe von Rechnern jeweils einen anderen Prozeß bearbeitet. Diese Aufgabe wird gemäß den Merkmalen des Patentanspruchs 1 und des Patentanspruchs 14 gelöst.

Der virtuelle Speicher stellt somit einen globalen virtuellen Adreßraum zur Verfügung, über den physikalische Speicher adressiert werden können. Dabei ist es vorteilhaft, daß jedem zu bearbeitendem Prozeß ein virtueller Adreßraum aus dem globalen virtuellen Adreßraum zugeordnet wird. Da bei der Bearbeitung eines Prozesses eine Gruppe von Rechnern beteiligt ist, wird dieser der virtuelle Adreßraum zugeordnet.

Die Realisierung des virtuellen Speichers arbeitet nach demselben Grundkonzept, das in vielen Betriebsystemen schon heute für das virtual paging eingesetzt wird. Der allen Rechnern gemeinsame Adreßraum wird also in Segmente und Seiten eingeteilt. Dabei enthält ein Segment eine festgelegte Anzahl von Seiten und die Seiten eine festgelegte Anzahl von Speicherstellen des physikalischen Speichers.

Wenn ein Rechner eine Seite des virtuellen Adreßraums benutzt, dann wird dieser virtuellen Seite eine Seite des physikalischen Speichers statisch zugeordnet, wobei die physikalischen Speicherseiten auf unterschiedlichen Rechnern angeordnet sein können. Zweckmäßig ist es dabei, wenn die virtuellen Seiten eines Segmentes auf physikalische Speicherseiten desselben Rechners abgebildet werden.

Bei einem Speicherzugriff eines Rechners auf eine Seite des physikalischen Speichers, die sich auf einem anderen Rechner befindet, muß der Zugriff zu dieser Seite mit Hilfe von Nachrichten über ein Kommunikationsnetz nachgebildet werden. Je nach geforderten Konsistenzgrad ist die Nachbildung unterschiedlich aufwendig:
Wenn eine absolute Konsistenz gefordert wird, müssen alle Rechner zu jedem Zeitpunkt eine konsistente Sicht des Speichers haben. Der Zugriff auf eine Speicherseite erfolgt in diesem Fall jeweils wortweise auf den Speicher des anderen Rechners, also auf die dort gespeicherte Originalseite (Klasse 1).
Wenn keine konsistente Sicht gefordert ist, so wird beim ersten Zugriff auf eine auf einem anderen Rechner gespeicherte Originalseite eine lokale Kopie dieser Seite beim zugreifenden Rechner angelegt. Die Abbildung der virtuellen Seite wird dann sc geändert, daß diese nunmehr auf die lokale Kopie verweist. Alle weiteren Zugriffe werden auf die lokale Kopie der Seite gerichtet. Wenn der Rechner durch einen Schreibzugriff auf die Kopie der Seite zugreift und damit den Inhalt der Seite ändert, dann muß festgelegt werden, ob die Originalseite ebenfalls geändert werden soll oder nicht.
Wenn bei einer Änderung der Kopie die Originalseite nicht mitgeändert wird, diese also nicht aktualisiert wird, liegt keine Konsistenz vor (Klasse 2).

Soll aber zumindest die Originalseite immer auf dem neuesten Stand sein, dann ist bei Änderung der Kopie durch einen Rechner eine Aktualisierung der Originalseite erforderlich. (Klasse 3). Dieses Verfahren bietet eine eingeschränkte Konsistenz. Bei parallelen Abläufen in räumlich verteilten Systemen ist die Reihenfolge von Ereignissen im allgemeinen undefiniert, es sei denn, daß eine bestimmte Ordnung vorgegeben wird, z.B. durch Synchronisationsoperationen. Die Aktualisierung der Originalseiten bei Änderungen von Kopien der Seiten kann sofort geschehen, dies muß aber nicht der Fall sein. Vielmehr muß sich eine Änderung einer Kopie erst dann bei der Originalseite auswirken, wenn aufgrund einer Synchronisation die Sichtbarkeit dieser Operation erwartet werden kann. Für die Synchronisation können dabei bestimmte Ereignisse bei der Bearbeitung von Teilaufgaben verwendet werden.

Eine mögliche Realisierung dieser Aktualisierung ist z.B. folgende:
Bei jedem Schreibzugriff auf eine Speicherzelle durch einen Rechner wird die Änderung bei der lokalen Seite durchgeführt und eine Änderungsnachricht an den Rechner mit der Originalseite gesandt. Vor der nächsten Initiierung eines Vorganges bei der Bearbeitung einer Teilaufgabe bzw. vor jeder Synchronisation wird eine Invalidierungsnachricht an alle möglicherweise betroffenen Rechner gesandt. Diese Invalidierungsnachrichten beziehen sich jeweils auf eine Seite, so daß für mehrere Zugriffe auf dieselbe Seite nur eine solche Nachricht erforderlich ist. Die Invalidierungsnachrichten werden zweckmäßigerweise nur an solche Rechner gesandt, die eine Kopie der geänderten Seite enthalten. Damit kann die Konsistenzforderung erfüllt werden, wenn das Rechnersystem die Reihenfolge der Nachrichten bewahrt.

Vorteilhaft ist es, daß mit dem erfindungsgemäßen virtuellen Speicher es möglich ist, die drei beschriebenen Konsistenzklassen gleichzeitig anzuwenden, da die benötigte Klasse jeweils als Eigenschaft einer Seite im virtuellen Adreßraum geführt wird. Damit ist die Realisierung eines virtuell gemeinsamen Speichers mit dem jeweils minimalen Aufwand möglich. Weiterbildungen der Erfindung ergeben sich aus den Unteransprüchen.

Anhand eines Ausführungsbeispiels, das in den Figuren dargestellt ist, wird die Erfindung weiter erläutert. Es zeigen
- Figur 1: eine Prinzipdarstellung des Parallelrechnersystems,
- Figur 2: der prinzipielle Aufbau eines Rechners des Parallelrechnersystems,
- Figur 3: eine virtuelle Adresse, eine Segmenttabelle und eine Seitentabelle,
- Figur 4: die Prinzipdarstellung der Synchronisation.

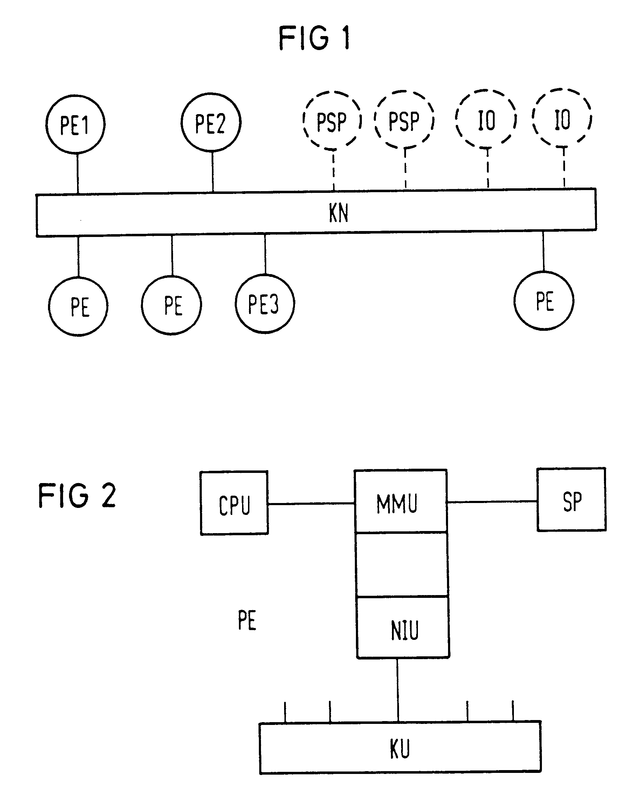

Figur 1 zeigt ein Prinzipbild des Parallelrechnersystems. Es sind einzelne Rechner PE vorgesehen, die über ein Kommunikationsnetzwerk KN miteinander verbunden sind. Der Aufbau eines solchen Parallelrechnersystems ist bekannt und braucht nicht weiter erläutert zu werden. Selbstverständlich können an das Kommunikationsnetzwerk KN noch weitere Einheiten angeschlossen sein, wie z.B. Speicher PSP und Ein/Ausgabeeinheiten IO; diese sind strichliert dargestellt und werden bei der weiteren Betrachtung außer Acht gelassen.

Der Aufbau eines Rechners PE kann so sein, wie er in Figur 2 dargestellt ist. Er enthält eine zentrale Datenverarbeitungseinheit CPU und einen Speicher SP und er kann weitere Einheiten MMU und NIU enthalten, wobei die Einheit NIU mit dem Kommunikationsnetzwerk KN verbunden ist. Die Einheit MMU, die zwischen CPU und dem Speicher SP angeordnet ist, kann den Speicher SP verwalten, also z.B. virtuelle Adressen übersetzen, Übersetzungstabellen aktualisieren usw.. Die Einheit NIU stellt die Verbindung des Rechners mit dem Kommunikationsnetzwerk KN her.

Die physikalischen Speicher SP der Rechner PE werden nun beim Betrieb des Parallelrechnersystems zu einem gemeinsamen virtuellen Speicher zusammengefaßt, mit dem jeder Rechner PE arbeiten kann. Durch die Zusammenfassung aller Speicher SP der Rechner PE entsteht ein virtueller Speicher mit einem globalen virtuellen Adreßraum, der bei der Bearbeitung von einzelnen Prozessen in kleinere Einheiten unterteilt werden kann, nämlich in die virtuellen Adreßräume. Von einem derartigen virtuellen Adreßraum machen dann die Rechner Gebrauch, die gemeinsam einen Prozeß bearbeiten.

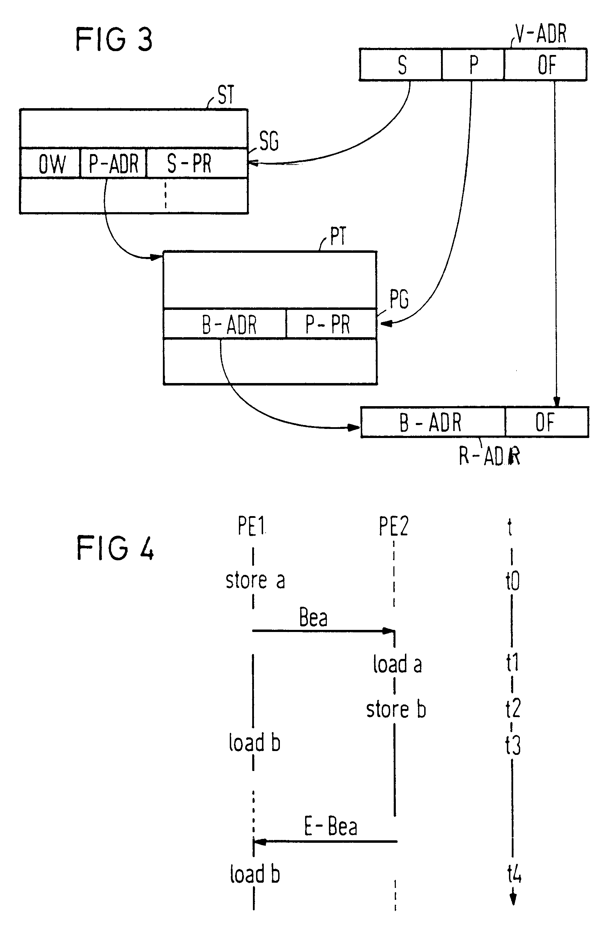

Die zugeordneten physikalischen Seiten sind dann in den physikalischen Speichern SP der Rechner enthalten. Die Adressierung der physikalischen Speicherstellen erfolgt über virtuelle Adressen, die als V-ADR in Figur 3 dargestellt ist. Die virtuelle Adresse V-ADR muß in eine physikalische Speicheradresse R-ADR übersetzt werden. Dies erfolgt über eine Segmenttabelle ST und Seitentabellen PT. Nach Figur 3 besteht z.B. die virtuelle Adresse V-ADR aus einem Teil S für die Adressierung eines Segmentes SG der Segmenttabelle ST, einem Teil P zur Adressierung der zugeordneten Seite PG in der Seitentabelle PT und aus einem Teil OF zur Angabe der physikalischen Speicherstelle innerhalb der Seite. OF wird auch Offset genannt.

Mit Hilfe des Bereiches S der virtuellen Adresse V-ADR wird das Segment SG innerhalb der Segmenttabelle ST angesteuert. In den Segmenten SG ist z.B. in einem Bereich OW angegeben, auf welchem Rechner das Segment gespeichert ist. In einem Bereich P-ADR ist angegeben, wo die Seitentabelle PT gespeichert ist, und in einem Bereich S-PR sind weitere Eigenschaften angegeben, wie z.B. die Anzahl der einem Segment zugeordneten Seiten; ein Eintrag zur Festlegung, ob eine Seite akutalisiert wird oder nicht; ein Eintrag darüber, ob eine Seite geändert worden ist; ein Eintrag darüber, ob ein Segment verschiedenen Prozessen zugeordnet ist oder nicht usw..

Mit Hilfe des Segmentes SG, und zwar des Bereiches P-ADR, wird die Seitentabelle PT aufgefunden. Mit Hilfe von P aus der virtuellen Adresse wird die Seite PG innerhalb der Seitentabelle gefunden. Die Seite PG kann nun die physikalische Adresse B-ADR der physikalischen Speicherseite enthalten und in einem Bereich P-PR Eigenschaften der Seite angeben, wie z.B., ob auf die Seite durch den Rechner zugegriffen werden darf, ob es sich um eine Originalseite handelt; ob die Seite geändert worden ist; ob von der Seite eine Kopie existiert usw..

Aus der Seitentabelle PG kann die Adresse B-ADR der physikalischen Speicherseite entnommen werden. Diese Adresse B-ADR wird mit dem Offset OF der virtuellen Adresse gekettet und damit entsteht eine physikalische Adresse R-ADR, die angibt, wo das Datenwort im physikalischen Speicher gespeichert ist, auf das zugegriffen werden soll.

Die physikalischen Speicherseiten sind in den Speichern SP der Rechner PE gespeichert. Die bei virtueller Adressierung erforderlichen Segmente und Seitentabellen sind zweckmäßigerweise so verteilt, daß ein Segment SG und die zugeordnete Seitentabelle PT ausschließlich auf einem einzigen Rechner PE gespeichert ist, also daß ein Segment und die zugeordnete Seitentabelle nicht über mehrere Rechner verstreut gespeichert ist. Zum Beispiel würde somit das Segment SG und die Seitentabelle PT auf einem Rechner PE gespeichert sein, ebenso die physikalischen Seiten, die über die zugeordnete Seitentabelle adressierbar sind.

Die physikalische Spelcherseite, die über die virtuelle Adresse V-ADR adressiert wird, kann auch auf einem anderen bei der Bearbeitung eines Prozesses beteiligten Rechner stehen. Nach der Umwandlung einer virtuellen Adresse V-ADR in eine physikalische Adresse P-ADR kann sich also ergeben, daß das zu adressierende Wort auf einem anderen Rechner PE gespeichert ist. Dies kann über die Segmenttabelle ST festgestellt werden.

Die globale virtuelle Adresse unterscheidet sich von einer virtuellen Adresse V-ADR dadurch, daß in ihr die virtuelle Adresse enthalten ist, zusätzlich eine Prozeßidentifikationsnummer. Damit ist es möglich, Speicherstellen über die Grenzen des virtuellen Adreßraumes, also über die Grenzen eines Prozesses hinaus zu adressieren.

Wie gesagt, kann die Bearbeitung eines Prozesses durch mehrere Rechner durchgeführt werden. Dabei führt jeder Rechner eine Teilaufgabe des Prozesses aus. Zu Beginn der Ausführung einer solchen Teilaufgabe kann der zugeordnete Rechner eine sog. Prozeßbearbeitungsanforderung abgeben und am Ende eine Nachricht abgeben, daß die Bearbeitung des Teilprozesses beendet ist. Bei der Bearbeitung des Prozesses stehen dabei den zugeordneten Rechnern ein virtueller Adreßraum zur Verfügung, der von den Speichern der Rechner gebildet wird. Wenn also z.B. der Rechner PE 1 seine Teilaufgabe ausführen will, dann erzeugt er eine Prozeßbearbeitungsanforderung und beginnt mit der Abarbeitung der Teilaufgabe. Bei einem Zugriff zum virtuellen Speicher muß er die virtuelle Adresse V-ADR in eine physikalische Adresse P-ADR umsetzen. Stellt er fest, daß die physikalische Speicherseite, auf die er zugreifen will, in seinem Speicher steht, es sich also um eine Originalseite handelt, dann kann er die Bearbeitung weiterführen, ohne daß über das Kommunikationsnetzwerk KN Nachrichten übertragen werden müssen. Die Bearbeitung ist dann sehr schnell. Findet aber der Rechner PE 1 bei der Umsetzung der virtuellen Adresse heraus, daß die physikalische Speicherseite, die er benötigt, auf einem anderen Rechner gespeichert ist, z.B. auf dem Rechner PE 3, dann muß der Inhalt dieser Speicherseite über das Kommunikationsnetzwerk KN erst in den Rechner PE 1 übertragen werden. Dazu können verschiedene Methoden eingesetzt werden:
Es ist möglich, daß der Rechner PE 1 den Inhalt der auf dem Rechner PE 3 gespeicherten physikalischen Seite wortweise holt, um seine Teilaufgabe auszuführen. Wenn der Rechner PE 1 die Speicherseite ändert, dann muß er dies im Rechner PE 3 veranlassen. Dadurch sind die Speicherseiten immer aktualisiert. Wenn dann z.B. ein anderer Rechner z.B. PE 2 auf diese Speicherseite im Rechner PE 3 zugreift, dann steht ihm diese Speicherseite aktualisiert zur Verfügung.
Wenn die Bearbeitung schneller erfolgen soll, dann ist es sinnvoll, daß die physikalische Speicherseite, die auf einem anderen Rechner als dem zugreifenden Rechner steht, als Kopie in den zugreifenden Rechner übertragen wird. Wenn also z.B. der Rechner PE 1 feststellt, daß eine bei der Bearbeitung der Teilaufgabe benötigte Speicherseite als physikalische Speicherseite im Rechner PE 3 als Originalseite steht, dann wird die Übertragung einer Kopie dieser Originalseite über das Kommunikationsnetzwerk KN in den Rechner PN 1 durchgeführt. Dort wird somit eine lokale Kopie der Originalseite gebildet, entsprechend muß dann die Abbildung der virtuellen Adresse auf die physikalische Adresse geändert werden, da nun der Rechner PE 1 auf die lokale Seite zugreifen wird. Bei einem Schreibzugriff des zugreifenden Rechners PE 1 kann dann nur die lokale Seite geändert werden.
Soll jedoch bei einem Schreibzugriff nicht nur die lokale Seite geändert werden, sondern auch die Originalseite aktualisiert werden, dann müssen zusätzliche Maßnahmen ergriffen werden. Wenn also die lokale Seite auf dem Rechner PE 1 steht und die Originalseite auf dem Rechner PE 3, dann muß bei Änderung der lokalen Seite durch den Rechner PE 1 auch die Originalseite beim Rechner PE 3 aktualisiert werden. Da es zusätzlich möglich ist, daß auch auf anderen Rechnern, z.B. auf dem Rechner PE 2, eine Kopie dieser Originalseite vorhanden ist, dann müssen auch diese Kopien der Originalseite aktualisiert werden, da sonst die übrigen Rechner von nicht mehr aktuellen Kopien der Originalseite ausgehen würden. Die Aktualisierung der Originalseite und der Kopien der Originalseite, also der lokalen Seiten, kann auf folgende Weise durchgeführt werden:
Bei einem Schreibzugriff zu einer Kopie einer Seite wird auch die Originalseite geändert;
jeder Rechner notiert alle Schreibzugriffe während der Ausführung seiner Teilaufgabe bezogen auf eine Seite. Dazu kann z.B. in der Seitentabelle im Bereich P-PR eine Markierung aufgenommen werden. Dies muß immer erfolgen, wenn eine Seite geändert wird, gleichgültig, ob es sich um die Originalseite oder um eine lokale Seite handelt.
Zu festgelegten Zeitpunkten wird eine Liste der geänderten Seiten über das Kommunikationssystem allen Rechnern mitgeteilt oder nur den Rechnern, die bei der Ausführung des Prozesses mitbeteiligt sind. Diese Nachricht wird Invalidierungsnachricht genannt. Durch die Invalidierungsnachricht werden die noch nicht geänderten lokalen Seiten gesperrt, so daß Zugriffe auf diese Seiten nicht mehr möglich sind.
Wenn ein Lesezugriff zu einer gesperrten Seite von einem Rechner abgegeben wird, dann wird die nicht aktuelle lokale Seite dadurch aktualisiert, daß sie mit der Originalseite in Übereinstimmung gebracht wird. Die Sperrung der Seite wird wieder aufgehoben.

Der Zeitpunkt der Aktualisierung kann synchron durchgeführt werden in Abhängigkeit des Auftretens von bestimmten Ereignissen während der Abarbeitung eines Prozesses. Zum Beispiel ist es möglich, daß die Aktualisierung dann erfolgt, wenn ein Rechner eine Prozeßbearbeitungsanforderung stellt, oder wenn er meldet, daß er die Teilaufgabe bearbeitet hat oder wenn Nachrichten über das Kommunikationsnetz übertragen werden müssen. Es ist auch möglich, andere Ereignisse während der Bearbeitung des Prozesses als Synchronisierungsereignisse heranzuziehen. Wenn dann ein solches Synchronisierungsereignis auftritt, dann werden die lokalen Seiten auf den neuesten Stand gebracht.

Ein Beispiel der Synchronisation kann der Figur 4 entnommen werden. In einem Zeitdiagramm ist gezeigt, zu welchen Ereignissen eine Aktualisierung durchgeführt werden kann. Dabei wird im Vergleich zu einer Zeitachse für die Zeit t die Bearbeitung von Teilaufgaben durch den Rechner PE 1 und durch den Rechner PE 2 dargestellt. Es sei angenommen, daß der Rechner PE 1 zum Zeitpunkt t₀ auf eine Speicherseite a zugreift (store a), die als Originalseite auf einem anderen Rechner, z.B. PE 3, gespeichert ist. Der Zugriff soll ein Schreibzugriff sein. Im weiteren Verlauf erzeugt der Rechner PE 1 z.B. eine Prozeßbearbeitungsanforderung Bea, die als Ereignis für die Synchronisation verwendet wird. Dementsprechend werden die lokalen Kopien auf den neuesten Stand gebracht. Auch die beim Rechner PE 2 vorhandene Kopie der Seite a wird also aktualisiert (load a), so daß zum Zeitpunkt t₁ alle lokalen Seiten und die Originalseite auf dem neuesten Stand sind. Wird nun zum Zeitpunkt t₂ vom Rechner PE 2 auf die lokale Seite b zugegriffen und diese geändert (store b), und wird anschließend zum Zeitpunkt t₃ die lokale Seite b beim Rechner PE 1 gelesen, dann arbeitet der Rechner PE 1 mit einer Seite b, die nicht auf dem neuesten Stand ist. Erst bei Beendigung der Bearbeitung der Teilaufgabe durch den Rechner PE 1 tritt wiederum ein Ereignis E-Bea auf, das zur Synchronisation verwendet wird und damit zur Aktualisierung der lokalen Seiten. Zum Zeitpunkt t₄ ist die lokale Seite b beim Rechner PE 1 auf dem neuesten Stand. Durch entsprechende Wahl von Ereignissen ist es somit möglich, eine Synchronisierung der lokalen und der Originalseite herbeizuführen, so daß bei der Bearbeitung von Teilaufgaben durch die Rechner nur mit Seiten gearbeitet wird, die auf dem neuesten Stand sind.

Dazu kann ein Eintrag in die zugeordnete Seitentabelle gemacht werden, wenn eine Seite geändert wird. Wenn eine Synchronisation gestartet wird, werden alle Seitentabellen abgefragt und eine Liste der geänderten Seiten erstellt. In der Segmenttabelle kann ebenfalls durch einen Eintrag festgelegt werden, ob Seiten eines Segmenten geändert worden sind. Damit wird erreicht, daß nur Seitentabellen mit geänderten Seiten abgefragt werden. Selbstverständlich kann die Liste der geänderten Seiten auch sofort erstellt werden, immer wenn eine Seite geändert wird.

Die Liste der geänderten Seiten (Invalidierungsliste) kann z.B. an alle an der Bearbeitung eines Prozesses beteiligten Rechner gesandt werden. Es ist aber auch möglich, die Liste nur den Rechnern zuzusenden, die eine Prozeßbearbeitungsanforderung gestellt haben.

Um zu verhindern, daß ein Lesezugriff zu einer Seite stattfinden kann, auf die vorher ein Schreibzugriff erfolgt ist, ohne daß die Seite schon geändert worden ist, können in Abhängigkeit der Lage der Seite folgende Wege beschnitten werden:
Wenn der Schreibzugriff in eine lokale Seite erfolgt, wird die Änderung in der lokalen Seite durchgeführt und eine Nachricht über das Netz zum Eigentümer der Seite zur Änderung der Originalseite gesandt.
Wenn die Originalseite geändert wird, dann wird die geänderte Seite in der Seitentabelle markiert, es sei denn, daß noch keine Kopien der Originalseite erstellt worden sind.
Bevor die Bearbeitung des Prozesses weitergeht, müssen alle Kopien der Seiten auf anderen Rechnern gesperrt werden (Invalidierungsnachricht). Die Rechner können über die Segmenttabelle ermittelt werden. Die Markierung der geänderten Seite wird dann beseitigt.

## Patentansprüche

1. Virtueller Speicher für Gruppen von parallel arbeitenden Rechnern, bei dem die Rechner (PE) über ein Kommunikationsnetz (KN) miteinander verbunden sind und jede Gruppe von Rechnern jeweils einen Prozeß bearbeitet,
bei dem zumindest die den Rechnern zugeordneten physikalischen Speicher (SP) gemeinsam den virtuellen Speicher mit einem globalen virtuellen Adreßraum bilden, der in in Seiten aufgeteilte Segmente unterteilt ist,
bei dem der globale virtuelle Adreßraum in virtuelle Adreßräume unter Verwendung von virtuellen Adressen (V-ADR) dadurch unterteilt ist, daß jeweils über ein in einer den Rechnern zur Verfügung stehenden Segmenttabelle (ST) enthaltenes Segment (SG) jeweils eine den physikalischen Adreßraum festlegende Seitentabelle (PT) auswählbar ist, und daß ein Segment (SG) und die zugeordnete Seitentabelle (PT) ausschließlich auf einem einzigen Rechner (PE) gespeichert sind, und daß in jedem Segment (SG) in einem Bereich (OW) angegeben ist, auf welchem Rechner das Segment gespeichert ist,
bei dem bei Bearbeitung eines Prozesses durch eine Gruppe von Rechnern, die Teilaufgaben des Prozesses ausführen, dieser Gruppe von Rechnern ein virtueller Adreßraum über mindestens ein Segment der Segmenttabelle (ST) zugeordnet ist.

2. Virtueller Speicher nach Anspruch 1, bei dem über eine aus einer Prozeßidentifikationsnummer und der virtuellen Adresse (V-ADR) bestehende globale virtuelle Adresse Speicherstellen über die Grenzen des einem Prozeß zugeordneten virtuellen Adreßraums hinaus adressierbar sind.

3. Virtueller Speicher nach Anspruch 1 oder 2,
dadurch **gekennzeichnet**,
daß jeder an der Prozeßbearbeitung beteiligter Rechner mindestens ein Segment und die dazugehörige Seitentabelle für die in seinem physikalischen Speicher gespeicherten physikalischen Seiten aufweist.

4. Virtueller Speicher nach Anspruch 3,
dadurch **gekennzeichnet,**
daß die Zuordnung von Segmenten (SG) zu Rechnern (PE) durch eine Segmenttabelle (ST) erfolgt, die den Inhaber eines Segmentes, die dem Segment zugeordnete Seitentabelle (PT) und weitere Eigenschaften des Segmentes und der Seitentabelle kennzeichnende Einträge enthält.

5. Virtueller Speicher nach Anspruch 4,
dadurch **gekennzeichnet**,
daß die Seitentabelle physikalische Seitenadressen speichert bestehend aus der Startadresse für die physikalische Seite im physikalischen Speicher (B-ADR) und weiteren Eigenschaften der Seite kennzeichnenden Einträgen.

6. Virtueller Speicher nach einem der vorhergehenden Ansprüche,
dadurch **gekennzeichnet**,
daß bei einem Speicherzugriff eines Rechers auf eine Seite des physikalischen Speichers, die sich auf einem anderen Rechner als Originalseite befindet, eine Kopie der Originalseite über das Kommunikationsnetz (KN) in den zugreifenden Rechner übertragen wird.

7. Virtueller Speicher nach Anspruch 6,
dadurch **gekennzeichnet**,
daß der Zugriff wortweise auf die physikalische Originalseite erfolgt, die in einem anderen Rechner gespeichert ist.

8. Virtueller Speicher nach Anspruch 6,
dadurch **gekennzeichnet**,
daß beim ersten Zugriff auf die Seite eine Kopie der Originalseite im Speicher des zugreifenden Rechners angelegt wird und der Rechner anschließend auf die lokale Seite zugreift.

9. Virtueller Speicher nach Anspruch 8,
dadurch **gekennzeichnet**,
daß Änderungen einer Seite durch Schreibzugriffe sowohl in der lokalen als auch in der Originalseite erfolgen.

10. Virtueller Speicher nach Anspruch 9,
dadurch **gekennzeichnet**,
daß die Änderungen auch in den lokalen Kopien dieser Seite bei anderen Rechnern erfolgen.

11. Virtueller Speicher nach Anspruch 10,
dadurch **gekennzeichnet**,
daß die Änderungen der lokalen Seiten der anderen Rechner synchronisiert zu festgelegten Zeitpunkten erfolgt.

12. Virtueller Speicher nach Anspruch 11,
dadurch **gekennzeichnet**,
daß vor der synchronisierten Aktualisierung der lokalen Seiten der anderen Rechner eine Invalidierungsnachricht an die Rechner übertragen wird.

13. Virtueller Speicher nach Anspruch 12,
dadurch **gekennzeichnet**,
daß die Synchronisation der Aktualisierung dann erfolgt, wenn eine Prozeßbearbeitungsanforderung durch einen Rechner gestellt wird, wenn die Prozeßbearbeitung beendet oder wenn Nachrichten über das Kommunikationsnetz ausgetauscht werden.

14. Verfahren zum Betrieb eines virtuellen Speichers für Gruppen von parallel arbeitenden Rechnern, bei dem die Rechner (PE) über einen Kommunikationsnetz (KE) miteinander verbunden sind und jede Gruppe von Rechnern einen Prozeß bearbeitet,
bei dem zumindest die den Rechnern (PE) zugeordneten physikalischen Speicher (SP) einen gemeinsamen virtuellen Speicher mit einem globalen virtuellen Adreßraum bilden, der in Seiten aufgeteilte Segmente unterteilt wird,
bei dem jeder Rechner der an der Bearbeitung eines Prozesses beteiligten Gruppe von Rechnern über ein Segment, das in einer allen Rechnern zur Verfügung stehenden Segmenttabelle (ST) enthalten ist, dieselbe Seitentabelle und von der ausgehend physikalische Seiten im physikalischen Speicher eines Rechners dieser Gruppe ansteuert, wobei die Seitentabelle und zugeordnet die physikalischen Speicherseiten auf einem Speicher eines anderen am Prozeß beteiligten Rechners stehen können, und wobei ein Segment und die zugeordnete Seitentabelle ausschließlich auf einem einzigen Rechner gespeichert sind, und wobei in jedem Segment in einem Bereich angegeben ist, auf welchen Rechner das Segment gespeichert ist,
bei dem bei einem Speicherzugriff eines Rechners dieser Gruppe auf eine Seite des physikalischen Speichers, die sich auf einem anderen Rechner als Originalseite befindet, eine Kopie der Originalseite als lokale Seite über das Kommunikatonsnetz (KN) in den zugreifenden Rechner und in die übrigen Rechner der Gruppe übertragen wird,
bei dem bei allen Schreibzugriffen zu einer lokalen Seite durch den zugreifenden Rechner auch die Originalseite über das Kommunikationsnetz geändert wird, indem die geänderten Seiten notiert werden,
bei dem die Liste der geänderten Seiten über das Kommunikationsnetz den Rechnern der Gruppe zugeführt wird und dadurch die dortigen lokalen Seiten gesperrt werden,
und bei dem bei einem Lesezugriff zu einer gesperrten lokalen Seite durch einen Rechner diese Seite über die Originalseite aktualisiert wird.

15. Verfahren nach Anspruch 14,
bei dem bei Änderung einer Seite ein Eintrag in die Rechner zugeordnete Seitentabelle eingefügt wird und zu festgelegten Zeitpunkten die Seitentabellen der Rechner auf solche Einträge überprüft werden.

## Claims

1. Virtual memory for groups of computers operating in parallel, in which the computers (PE) are connected to one another via a communication network (KN) and each group of computers handles one process each, in which at least the physical memories (SP) allocated to the computers together form the virtual memory having a global virtual address space, which is subdivided into segments divided into pages, in which the global virtual address space is subdivided into virtual address spaces with the use of virtual addresses (V-ADR) by it being possible to select, by means of a segment (SG) included in a segment table (ST) at the disposal of the computers, a page table (PT) fixing the physical address space, and by a segment (SG) and the allocated page table (PT) being stored exclusively on a single computer (PE), and by it being specified in each segment (SG) in an area (OW) on which computer the segment is stored, in which, during handling of a process by a group of computers which execute subtasks of the process, this group of computers is allocated a virtual address space via at least one segment of the segment table (ST).

2. Virtual memory according to Claim 1, in which memory locations can be addressed via a global virtual address, comprising a process identification number and the virtual address (V-ADR), beyond the limits of the virtual address space allocated to a process.

3. Virtual memory according to Claim 1 or 2, characterized in that each computer involved in process handling has at least one segment and the associated page table for the physical pages stored in its physical memory.

4. Virtual memory according to Claim 3, characterized in that the allocation of segments (SG) to computers (PE) is performed by a segment table (ST), which contains the owner of a segment, the page table (PT) allocated to the segment and further attributes of the segment and of page-table characterizing entries.

5. Virtual memory according to Claim 4, characterized in that the page table stores physical page addresses, comprising the start address for the physical page in the physical memory (B-ADR) and further attributes of the page-characterizing entries.

6. Virtual memory according to one of the preceding claims, characterized in that, in the case of memory access by a computer to a page of the physical memory which is located on another computer as the original page, a copy of the original page is transferred via the communication network (KN) into the accessing computer.

7. Virtual memory according to Claim 6, characterized in that access is performed word by word to the physical original page which is stored in another computer.

8. Virtual memory according to Claim 6, characterized in that, on first access to the page, a copy of the original page is made in the memory of the accessing computer and the computer subsequently accesses the local page.

9. Virtual memory according to Claim 8, characterized in that amendments of a page are performed by write accesses both in the local page and in the original page.

10. Virtual memory according to Claim 9, characterized in that the amendments are also performed in the local copies of this page on other computers.

11. Virtual memory according to Claim 10, characterized in that the amendments of the local pages of the other computers are performed synchronized at fixed times.

12. Virtual memory according to Claim 11, characterized in that, before the synchronized updating of the local pages of the other computers, an invalidation message is transmitted to the computers.

13. Virtual memory according to Claim 12, characterized in that the synchronization of the updating is performed whenever a process-handling request is made by a computer, whenever the process handling is completed or whenever messages are exchanged via the communication network.

14. Method of operating a virtual memory for groups of computers operating in parallel, in which the computers (PE) are connected to one another via a communication network (KN) and each group of computers handles one process, in which at least the physical memories (SP) allocated to the computers (PE) form a common virtual memory with a global virtual address space, which is subdivided into segments divided into pages, in which each computer of the group of computers involved in the handling of a process selects the same page table by means of a segment contained in a segment table (ST) at the disposal of all the computers and, on the basis of said page table, selects physical pages in the physical memory of a computer of this group, it being possible for the page table and the physical memory pages allocated to it to be situated on a memory of another computer involved in the process, and a segment and the allocated page table being stored exclusively on a single computer, and it being specified in each segment in an area on which computer the segment is stored, in which, on memory access by a computer of this group to a page of the physical memory which is located on another computer as the original page, a copy of the original page is transferred as a local page via the communication network (KN) into the accessing computer and into the other computers of the group, in which, in the case of all write accesses to a local page by the accessing computer, the original page is also amended via the communication network by the amended pages being noted, in which the list of amended pages is sent via the communication network to the computers of the group and, as a result, the local pages there are blocked, and in which, in the case of a read access to a blocked local page by a computer, this page is updated by means of the original page.

15. Method according to Claim 14, in which, on amending a page, an entry is inserted in the page table allocated to the computers and, at fixed times, the page tables of the computers are checked for such entries.

## Revendications

1. Mémoire virtuelle pour un groupe de calculateurs fonctionnant en parallèle, et dans laquelle
les calculateurs (PE) sont reliés entre eux par l'intermédiaire d'un réseau de communication (KN) et chaque groupe de calculateurs traite respectivement un processus,
au moins les mémoires physiques (SP) associées aux calculateurs forment en commun la mémoire virtuelle ayant un espace virtuel global d'adresses, qui est subdivisé en segments divisés en pages,
l'espace virtuel global d'adresses est subdivisé en des espaces virtuels d'adresses par utilisation d'adresses virtuelles (V-ADR) par le fait qu'un tableau (PT) de pages, qui fixe l'espace physique d'adresses, peut être sélectionné respectivement par l'intermédiaire d'un segment (SG) contenu dans un tableau (ST) de segments mis à la disposition des calculateurs, et qu'un segment (SG) et le tableau de pages associé (PT) sont mémorisés exclusivement dans un seul calculateur (PE) et que dans une zone (OW) de chaque segment (SG) est indiqué dans quel calculateur le segment est mémorisé, et
lors du traitement d'un processus par un groupe de calculateurs, qui exécutent les tâches partielles du processus, un espace virtuel d'adresses est associé à ce groupe de calculateurs par l'intermédiaire d'au moins un segment du tableau de segments (ST).

2. Mémoire virtuelle suivant la revendication 1, dans laquelle des emplacements de mémoire peuvent être adressés par l'intermédiaire d'une adresse virtuelle globale constituée d'un numéro d'identification de processus et de l'adresse virtuelle (V-ADR), au-delà des limites de l'espace virtuel d'adresses associé à un processus.

3. Mémoire virtuelle suivant la revendication 1 ou 2, caractérisée par le fait que chaque calculateur participant à l'exécution d'un processus a au moins un segment et le tableau de pages, qui est associé, pour les pages physiques mémorisées dans sa mémoire physique.

4. Mémoire virtuelle suivant la revendication 3, caractérisée par le fait que l'association de segments (SG) à des calculateurs (PE) s'effectue au moyen d'un tableau de segments (ST), qui contient des entrées, qui caractérisent le détenteur d'un segment, le tableau de pages (PT) associé au segment, et d'autres caractéristiques du segment et du tableau de pages.

5. Mémoire virtuelle suivant la revendication 1, caractérisée par le fait que le tableau de pages mémorise des adresses physiques de pages, constituées de l'adresse de départ pour des entrées caractérisant la page physique de la mémoire physique (B-ADR) et d'autres caractéristiques de la page.

6. Mémoire virtuelle suivant l'une des revendications précédentes, caractérisée par le fait que lors d'un accès d'un calculateur à une page de la mémoire physique, qui se trouve dans un autre calculateur que celui contenant la page originale, une copie de la page originale est transférée au calculateur, qui effectue l'accès, par l'intermédiaire du réseau de communication (KN).

7. Mémoire virtuelle suivant la revendication 6, caractérisée par le fait que l'accès s'effectue par mots à la page originale physique, qui est mémorisée dans un autre calculateur.

8. Mémoire virtuelle suivant la revendication 6, caractérisée en ce que, lors du premier accès à la page, une copie de la page originale est mémorisée dans la mémoire du calculateur effectuant l'accès, et que le calculateur accède ensuite à la page locale.

9. Mémoire virtuelle suivant la revendication 8, caractérisée par le fait que des modifications d'une page s'effectuent au moyen d'accès d'enregistrement aussi bien à la page locale qu'à la page originale.

10. Mémoire virtuelle suivant la revendication 9, caractérisée par le fait que les modifications s'effectuent également dans les copies locales de cette page dans d'autres calculateurs.

11. Mémoire virtuelle suivant la revendication 10, caractérisée par le fait que les modifications des pages locales des autres calculateurs s'effectuent d'une manière synchronisée à des instants fixés.

12. Mémoire virtuelle suivant la revendication 11, caractérisée par le fait qu'avant l'actualisation synchronisée des pages locales des autres calculateurs, une information d'invalidation est transmise aux calculateurs.

13. Mémoire virtuelle suivant la revendication 12, caractérisée par le fait que la synchronisation de l'actualisation s'effectue, lorsqu'une demande de traitement de processus est présentée par un calculateur, lorsque l'exécution du processus se termine ou lorsque des informations concernant le réseau de communication sont échangées.

14. Procédé pour faire fonctionner une mémoire virtuelle pour des groupes de calculateurs fonctionnant en parallèle, selon lequel les calculateurs (PE) sont reliés entre eux par l'intermédiaire d'un réseau de communication (KE) et chaque groupe de calculateurs traite un processus,
au moins les mémoires physiques (SP) associées aux calculateurs forment une mémoire virtuelle commune ayant un espace virtuel global d'adresses, qui est divisé en segments subdivisés en pages,
chaque calculateur du groupe de calculateurs, qui participent à l'exécution d'un processus, commande, par l'intermédiaire d'un segment, qui est contenu dans un tableau (ST) de segments mis à la disposition de tous les calculateurs, le même tableau de pages et, à partir de ce tableau, des pages physiques dans la mémoire physique d'un calculateur de ce groupe, le tableau de pages et les pages physiques de la mémoire, qui lui sont associées, pouvant être dans une mémoire d'un autre calculateur participant au processus, un segment et le tableau de pages associé étant mémorisés exclusivement dans un seul calculateur, tandis que dans une zone de chaque segment est indiqué, dans quel calculateur le segment est mémorisé,
lors d'un accès d'un calculateur de ce groupe à une page de la mémoire physique, qui se trouve sous la forme d'une page originale dans un autre calculateur, on transmet une copie de la page originale en tant que page locale, par l'intermédiaire du réseau de communication (KN), au calculateur, qui effectue l'accès, et aux autres calculateurs du groupe,
lors de tous les accès d'enregistrement à une page locale par le calculateur effectuant l'accès, on modifie également la page originale par l'intermédiaire du réseau de communication, en relevant les pages modifiées,
on envoie la liste des pages modifiées aux calculateurs du groupe par l'intermédiaire du réseau de communication et on bloque ainsi les pages locales, présentes dans ces calculateurs, et
lors d'un accès de lecture, par un calculateur, à une page locale bloquée, on actualise cette page par rapport à la page originale.

15. Procédé suivant la revendication 14, selon lequel, lors d'une modification d'une page, on insère une entrée dans le tableau de pages associé au calculateur, et on contrôle les tableaux de pages des calculateurs en ce qui concerne de telles entrées, à des instants fixés.
